# EUROPEAN PATENT APPLICATION

(11) **EP 0 553 498 A2**
(43) Date of publication of application: **04.08.1993**
(21) Application number: 92122154.5
(22) Date of filing: 30.12.1992
(51) Int. Cl.: C08K 5/00, C08L 23/20

(54) **Additive composition for improved stability of poly(4-methyl-1-pentene)**

(30) Priority: 31.12.1991 US 815446
(71) Applicant: PHILLIPS PETROLEUM COMPANY, Bartlesville Oklahoma 74004 (US)
(72) Inventor: Cowan, Kiplin Dale, Bartlesville, OK 74006 (US); Willcox, Kenneth Wayne, Bartlesville, OK 74006 (US)
(74) Representative: Geissler, Bernhard, Dr. jur., Dipl.-Phys.

(57) **Abstract**

An additive composition for increasing processing stability and/ or UV stability of polymers of 4-methyl-1-pentene which consists essentially of an effective amount of at least one hindered amine and at least one phosphite compound wherein the ratio of said hindered amine to said phosphite is in the range of about .1 to about 10: about .1 to about 10. Optionally, one or more hindered phenols may also be prsent.

## Description

This invention relates to polymers of 4-methyl-1-pentene.

### BACKGROUND

Polyolefins undergo degradation when exposed to light, heat, oxygen, and gamma radiation, resulting in a deterioration of physical properties. Various agents including but not limited to, hindered amines, hindered phenols, benzophenones, benzotriazoles, phosphites and/or diphosphites, have been used singularly or in combination to minimize the degradation of polyolefins. Traditionally, the hindered phenols are used in combination with a phosphite or diphosphite.

Hindered amines, because of their ability to act as free radical scavengers, are generally used as ultraviolet (UV) light stabilizers. UV stability is of great importance to the plastics industry as it is highly undesirable for polymers to degrade with minimal exposure to sunlight. Thus, an additive for poly(4-methyl-1-pentene) which significantly increases polymer UV stability over that caused by either hindered amines alone or in known combinations with other compounds, would be a significant contribution to the art.

Polyolefins are processed into various end products for use. This processing can be done by blow-molding, injection-molding, or extrusion molding. Regardless of the processing technique(s) employed, polyolefins are subjected to processing stresses during this period. Due to this processing stress, also referred to as shear stress, long polyolefin chains are torn apart. Air oxidation and the high temperatures required to process polyolefins are perhaps major contributors to this phenomenon. It is known that the severity of the degradation which the polyolefin undergoes can be measured by monitoring its melt flow. Also, a correlation exists between the molecular weight, viscosity, and melt flow of a particular polyolefin. The lower the molecular weight, the lower the viscosity, and the higher the melt flow.

Degradation due to these processing stresses result in variations in the melt flow of the polyolefin. These variations in turn complicate the processing procedure to the extent that it requires constant and interrupting adjustments in extrusion rates and other processing conditions. At a minimum, this series of events contributes to inefficiencies in the utilization of time, materials, and labor.

Thus, it is most desirable to keep constant or to permit only minimal variations in the flow properties of polyolefins, especially during processing. One method of accomplishing this goal, is to improve the ability of the polyolefins to withstand processing stresses. Therefore, providing additive packages capable of increasing processing stability is a significant contribution to the art.

### SUMMARY OF THE INVENTION

It is therefore an object of this invention to provide additive packages which keep constant or permit only minimal variations in the melt flow properties of poly(4-methyl-1-pentene).

It is another object of the invention to provide improved poly(4-methyl-1-pentene) composition having greater processing stability.

It is a further object of the invention to provide additive packages which greatly improve UV stabilization of poly(4-methyl-1-pentene).

It is yet another object of the invention to provide an improved poly(4-methyl-1-pentene) compositions having greater UV stability.

These and other objects of the present invention will become apparent upon inspection of the disclosure and the claims herein provided.

In accordance with the present invention, there are provided additive compositions for improving processing stability of poly(4-methyl-1-pentene) which comprise at least one hindered amine, at least one phosphite compound, and optionally one or more hindered phenols.

In accordance with another embodiment of this invention, there are provided poly(4-methyl-1-pentene) compositions having improved processing stability, comprising poly(4-methyl-1-pentene) and an additive package containing an effective amount of at least one hindered amine, and at least one phosphite compound, and optionally one or more hindered phenols.

In accordance with yet another embodiment of this invention, there are provided additive compositions for increasing UV stability of poly(4-methyl-1-pentene) which comprise at least one hindered amine, at least one phosphite compound, and optionally one or more hindered phenols.

In accordance with a further embodiment of this invention, there are provided poly(4-methyl-1-pentene) compositions having improved UV stability, comprising poly(4-methyl-1-pentene) and an additive package containing an effective amount of at least one hindered amine, at least one phosphite compound, and optionally one or more hindered phenols.

### DETAILED DESCRIPTION

As presently practiced, additive compositions comprising at least one hindered amine, at least one phosphite compound, and optionally one or more hindered phenols are provided. These compositions are useful for improving processing stability and/or UV stability of polymers of 4-methyl-1 pentene. The preferred weight ratio of the hindered amine to the phosphite compound can be in the range of about 0.1 to about 10: about 0.1 to about 10. The preferred ratio is about 1:2. When a hindered phenol is added, the preferred weight ratio of the hindered amino to the phosphite compound to the hindered phenol can be in the respective ranges of about 0.1 to about10: about 0.1 to about 10: about 0.1 to about 10. The preferred ratio is 1: 2: 1 respectively.

All hindered amines, are generally considered useful in the practice of this invention. This class of compounds includes:
(a) dimethylsuccinate polymer with 4-hydroxy-2,2,6,6-tetramethyl-1-piperidenethanol.
(b) poly((6-((1,1,3,3-tetramethylbutyl)-imino)-1,3,5-triazine-2,4-diyl)(2-3,2,6,-6-tetramethylpiperidyl)-imino)-hexamethylene-(4-(2,2,6,6-tetramethylpiperidyl)-imino));
(c) poly((6-morpholino-s-triazine-2,4-diyl)(2,2,6,6-tetramethyl-4-piperidyl)imino)-hexamethylene(2,2,6,6-tetramethyl-4-piperidyl)imino);
(d) bis(2,2,6,6-tetramethyl-4-piperidinyl)sebacate;
(e) poly(2,2,6,6-tetraalkyl-4-piperidyl)amine; and
All phosphite compounds, are generally considered useful in the practice of this invention. This class of compounds include:
(a) bis(2,4-di-t-butylphenyl)pentaerythritol diphosphite,
(b) bis(2,4-di-t-butylphenyl)pentaerythritol diphosphite + triisopropylamine,
(c) tris-2,4-di-t-butylphenylphosphite,
(d) bis(2,4-tri-t-butylphenyl)pentraerythritol diphosphite,
(e) distearylpentaerythritol diphosite, and
(f) tetrakis[2,4,di-tert-butylphenyl]4,4'biphenylene diphosphite.

The addition of a hindered phenol compound is optional. While hindered phenols contribute to the improvement of both processing stability and UV stability when added in combination of the hindered amines and phosphites, the greatest synergism effect exists between the hindered amines in combination with the phosphites. All hindered phenols are also generally considered useful in the practice of this invention. This class of compounds includes:
(a) tetrakis(methylene(3,5-di-t-butyl-4-hydroxyhydrocinnamate))-methane;
(b) octadecyl-3-5-di-t-butyl-4-hydroxyhydrocinnamate;
(c) 1,3,5-tris(3,5-di-t-butyl-4-hydroxybenzyl)-mesitylene;
(d) 1,3,5-tris(3,5-di-butyl-4-hydroxybenzyl)-isocyanurate; and
(e) 3,5-di-t-butyl-4-hydroxyhydrocinnamic acid triester with 1,3,5-Tris(2-hydroxyethyl)-s-triazine-2,4,6-(1H,3H,5H)trione.

When the desired result is improved processing stability, the preferred combination of hindered amino and phosphite compound is respectively: dimethylsuccinate polymer with 4-hydroxy-2,2,6,6-tetramethyl-1-piperidenethanol and bis(2,4-di-t-butyl)pentaerythritoldiphosphate, present in a preferred ratio of 1:2. If the optional hindered phenol is added, the preferred addition is that of 1,3,5-tris(3,5-di-t-butyl-4-hydroxybenzyl)-mesitylene. These compounds are preferably present in the respective ratio of 1: 2: 1.

When the desired result is improved UV stability, the preferred combination of hindered amino and phosphite is respectively: dimethylsuccinate polymer with 4-hydroxy-2,2,6,6-tetramethyl-1-piperidenethanol and tris-2-4,di-t-butylphenylphosphite, present in a preferred ratio of 1:2.. If the optional hindered phenol is added, the preferred addition is that of 1,3,5-tris(3,5-dibutyl-4-bydroxybenzyl)-isocyanurate. These compounds are preferably present in the respective ratio of 1:2:1.

In accordance with another embodiment of the present invention, a polyolefin is combined with the above additive composition consisting of a hindered amino, a hindered phenol and a phosphite compound. The resulting combination is mixed for a period of time sufficient and under conditions suitable to achieve a homogeneous mixture.

In general, all polymers are useful in the practice of this invention. Preferred however, are the polyolefins, examples of which include but are not limited to, poly(4-methyl-1-pentene), polypropylene, and polyethylene. Poly(4-methyl-1-pentene) is the preferred member of this class of compounds. Conventional additives including but are not limited to antistatic agents acid neutralizers, thioesters, and nucleating agents, as well as colorants which may also be used in the practice of this invention.

The inventive additive package comprises at least one hindered amino, at least one phosphite compound, and optionally one or more hindered phenols in respective amounts sufficient to produce the desired effects on the polyolefins, i.e., improved processing stability and/or UV stability. The hindered amines and hindered phenols can be present in an amount within a broad range of from about 0.0001 to about 10.0 percent (wt/wt) percent, with a preferred range of about 0.01 to about 1.0 percent (wt.wt); and a most preferred amount in the range of about 0.05 to 0.5 percent (wt/wt); and the phosphite compound can be present in an amount that is within the same broad range as herein disclosed for the hindered amines and hindered phenols. However, the preferred amount of the phosphite compound is in an amount in the range of about 0.010 to about 1.0 percent (wt/wt), and the most preferred range is from about 0.05 to about 0.40 percent (wt/wt). It is noted that these weight percents stated herein, are based on the combined weight of the poly(4-methyl-1-pentene) and of the inventive additive package.

A general process for improving processing stability and UV stability of poly(4-methyl-1-pentene) by combining it with the inventive additive package comprises the following steps.

The polymer is introduced into a suitable mixing vessel. Subsequently a measured amount of a hindered amine, a phosphite, and optionally a hindered phenol are introduced into the mixing vessel. The mixture containing the polymer and the inventive additive package is thoroughly mixed and extruded repeatedly. The extrudate can then be intermittently measured for melt flow (processing stability) after each extrusion.

Mixing of ingredients to form the inventive composition can be accomplished by employing any conventional methods and equipment known in the art. The mixing can be carried out at any suitable temperature. The general temperature range for conducting this mixing of ingredients is in the range of from about 200°C to about 360°C. The preferred temperature range is from about 250°C to 320°C. It is noted that higher temperature leads to accelerated degradation and are not generally useful in the practice of this invention.

The residence time of the polymer is also important in the practice of this invention. Residence time depends on a number of factors which include but are not limited to the screw speed and the l/d ratio where l/d is length over diameter of screw. It is generally true that the residence time is directly proportional to the screw speed and inversely proportional to the l/d ratio. The screw speed which is generally useful in the practice of this invention ranges from about 30 to about 100 revolutions per minute (rpm). Preferred however, is a screw speed of from about 40 to 70 rpm.

The melt flow measurements indicate the processing stability of the polyolefins. The term processing stability as used herein refers to the degree of change in melt index with repeated extrusions. Thus, a small degree of change in melt index is evidence of improved processing stability. UV stability as used herein refers to the ability of the polymer to withstand exposure to UV light without undergoing significant, rapid degradation.

### Examples

The following examples have been provided merely to illustrate the practice of the invention and should not be read as to limit the scope of the invention or the appended claims in any way.

### Additive and Polymer Mixing

The following procedure for additive and polymer mixing is relevant to all following examples.

Polymethylpentene (PMP) fluff was weighed out and mixed with a previously prepared concentrate of the same lot of Polymethylpentene and the additive formulation to be evaluated. The fluff and concentrate were added to a polyethylene bag which was sealed and inserted into a sixty-four ounce wide mouth polypropylene bottle. The bottle was tumbled on a roll mill for one hour to thoroughly mix polymer and additives. The polyethylene insert was used instead of the polypropylene bottle alone to reduce static cling to the container walls and allow better sample recovery.

### Extrusion

The following procedure for extrusion is relevant to Examples 1-6 infra which demonstrate improved processing stability.

Polymethylpentene containing the additive formulation was extruded through a 0.125 inch stand die using a 0.75 inch Brabender single screw extruder having a length to width (L/D) ratio of 24. Extrusion temperatures were 260 to 310°C at screw speeds of 40 to 50 RPM. The majority of extrusions were carried out at 300°C and 50 RPM. The extruded strand was water cooled at 25 to 30°C and pelletized on a Killian 2 inch Lab Pelletizer. The pelletized sample was extruded and pelletized two more times using the same conditions, for a total of three passes on each sample. The material was sampled after each pass for melt flow measurements.

### Ultraviolet (UV) Light Aging

The following procedure for testing UV stability is relevant to Example 7 infra.

Samples were compression molded at 525°F, 25 tons force, into a 5x5 inch by 20 mil sheet, from which five 0.5 x 1.75 inch were cut. These strips were each placed on a weatherometer rack and aged in an Atlas Xenon Weatherometer at 75°F. Failure was defined as a break upon flexing strip to 90°. The time to failure in hours was a calculated average of the time to failure of the five individual strips.

### Explanation of Tables

A notation for the melt flow of the polymer after the third extruder pass divided by the melt flow of the polymer after first extruder pass. The polymethylpentene used in these had an initial melt flow of 140 or higher divided by a first pass melt index of 20. An upper ratio limit of 7 was chosen because melt indices of over 140 are difficult to measure accurately, and are out of range practical interest for blow and injection molding applications.

Tables refer to Roman Numbers I-XVI which designate the following chemical compositions:

### Hindered Amines

I - dimethylsuccinate polymer with 4-hydroxy-2,2,6,6-tetramethyl-1-piperidenethanol,
II - poly-((6-((1,1,3,3-tetramethylbutyl-imino)1,3,5-triazine-2,4-diyl)2-(2,2,6,6-tetramethylpiperidyl)-imino-hexamethylene-4-(2,2,6,6-tetramethylpiperidyl)-)imino)),
III - poly(((6-morpholino-s-triazine-2,4-diyl()2,2,6,6-tetramethyl-4-piperidyl)imino-)-hexamethylene(2,2,6,6-tetramethyl-4-piperidyl)imino),
IV - bis(2,2,6,6-tetramethyl-4-piperidinyl)sebacate,
V - poly(2,26,6-tetraalkyl-4-piperidyl)amine; and

### Phosphite Compounds

VI - bis(2,4-di-t-butylphenyl)pentaerythritol diphosphite,
VII - bis(2,4-di-t-butylphenyl)pentaerythritol diphosphite triisopropylamine,
VIII - tris-2,4-di-t-butylphenylphosphite,
IX - bis(2,4-tri-t-butylphenyl)pentraerythritol diphosphite, and
X - distearylpentaerythritol diphosite.
XI - tetrakis[2,4 di-tert-butyl phenyl]4,4'biphenylene diphosphonite

### Hindered Phenols

XII - tetrakis(methylene(3,5-di-t-butyl-4-hydroxyhydrocinnamate))methane,
XIII - octadecyl-3-5-di-t-butyl-4-hydroxyhydrocinnamate,
XIV - 1,3,5-tris(3,5-di-t-butyl-4-hydroxybenzyl)-mesitylene,
XV - 1,3,5-tris(3,5-di-t-butyl-4-hydroxybenzyl)-isocyanurate; and
XVI - 3,5-di-t-butyl-4-hydroxyhydrocinnamic acid triester with 1,3,5-tris-

### EXAMPLE 1

Table 1 shows the synergism between the HALS (I) and phosphite (VII) resulting in improved processing stability.

**Table 1**

| Synergism of (I) and Phosphite (VII) | | | |
|---|---|---|---|
| Additive Concentration % | | | |
| Run | VII | I | P3/P1 |
| Cntrl | No AO | | >7.00 |
| 1 | 0.2 | | >7.00 |
| 2 | | 0.1 | >7.00 |
| 3 | 0.2 | 0.1 | 2.49 |

Tables 2, 3, and 4 show the synergism and improved processing stability of HALS (I), Phosphites (VII, and Irgafos VIII) and a hindered phenol(XII, XV, or XIV). These results show that the HALS/phosphite combination is effective with or without zinc stearate present. These results also show that the HALS/phosphite effect is enhanced by the presence of a hindered phenol, i.e., an optimum effect results from the combination of three additives; hindered phenol, phosphite and HALS.

### Example 2

**Table 2**

| Synergism of HALS I, Phosphite VIII & VII, and Hindered Phenol XV | | | | | | |
|---|---|---|---|---|---|---|
| Additive Concentration % | | | | | | |
| Run | XV | VIII | VII | I | Zn St | P3/P1 |
| Cntrl | No AO | | | | | >7.00 |
| 1 | 0.1 | | | | | >7.00 |
| 2 | | 0.2 | | | | >7.00 |
| 3 | | | 0.2 | | | >7.00 |
| 4 | | | | 0.1 | | >7.00 |
| 5 | 0.1 | | | 0.1 | | 4.29 |
| 6 | 0.1 | | 0.2 | | | 3.43 |
| 7 | 0.1 | 0.2 | 0.2 | 0.1 | | 1.78 |
| 8 | 0.1 | 0.2 | | | | 2.91 |
| 9 | 0.1 | 0.2 | | 0.1 | | 2.06 |
| 10 | 0.1 | | 0.2 | 0.1 | 0.05 | 1.92 |
| 11 | 0.1 | 0.2 | | 0.1 | 0.05 | 2.20 |

### Example 3

**Table 3**

| Synergism of 622, Phosphite VIII & VII, and Hindered Phenol XIV | | | | | | |
|---|---|---|---|---|---|---|
| Additive Concentration % | | | | | | |
| Run | XIV | VIII | VII | I | Zn St | P3/P1 |
| Cntrl | No AO | | | | | >7.00 |
| 1 | 0.1 | | | | | >7.00 |
| 2 | | 0.2 | | | | >7.00 |
| 3 | | | 0.2 | | | >7.00 |
| 4 | | | | 0.1 | | >7.00 |
| 5 | 0.1 | | 0.2 | | | 3.52 |
| 6 | 0.1 | | 0.2 | 0.1 | | 1.84 |
| 7 | 0.1 | | 0.2 | 0.1 | | 2.27 |
| 8 | 0.1 | 0.2 | | 0.1 | | 2.27 |

### Example 4

**Table 4**

| Synergism of HALS I, Phosphite VIII & VII, and Hindered Phenol XII | | | | | | |
|---|---|---|---|---|---|---|
| Additive Concentration % | | | | | | |
| Run | XII | VIII | VII | I | Zn St | P3/P1 |
| Cntrl | No AO | | | | | >7.00 |
| 1 | 0.1 | | | | | >7.00 |
| 2 | | 0.2 | | | | >7.00 |
| 3 | | | 0.2 | | | >7.00 |
| 4 | | | | 0.1 | | >7.00 |
| 5 | 0.1 | 0.2 | | | | 2.30 |
| 6 | 0.1 | | | 0.1 | | 2.47 |
| 7 | 0.1 | 0.2 | | 0.1 | 0.05 | 2.13 |
| 8 | 0.1 | | 0.2 | 0.1 | 0.05 | 2.07 |

### Example 5

Table 5 shows the effects of the presence of Zinc Stearate. These data show that zinc stearate does not enhance the effects of the additive package. In general the presence or absence of zinc stearate does not affect the process stabilization performance of the additive package. There some exceptions, where zinc stearate appears to have a detrimental effect, but in no case did zinc improve processing stability in the presence of a phosphite and/or HALS. The improvement in processing stability is due to synergistic effects of the phosphite-HALS interaction.

**Table 5**

| Effects of Zinc Stearate | | | | | | | | |
|---|---|---|---|---|---|---|---|---|
| Additive Concentration % | | | | | | | | |
| Run | XV | XIV | XII | VIII | VII | I | Zn St | P3/P1 |
| Cntrl | No AO | | | | | | | >7.00 |
| 1 | 0.1 | | | | | | | >7.00 |
| 2 | 0.1 | | | | | | 0.05 | 3.81 |
| 3 | 0.1 | | | | | 0.1 | | 4.29 |
| 4 | 0.1 | | | | | 0.1 | 0.05 | 4.69 |
| 5 | 0.1 | | | 0.2 | | 0.1 | | 2.06 |
| 6 | 0.1 | | | 0.2 | | 0.1 | 0.05 | 2.20 |
| 7 | 0.1 | | | | 0.2 | 0.1 | | 1.96 |
| 8 | 0.1 | | | | 0.2 | 0.1 | 0.05 | 1.92 |
| 9 | 0.1 | | | 0.2 | | 0.1 | | 2.92 |
| 10 | 0.1 | | | 0.2 | | | 0.10 | 4.30 |
| 11 | | 0.1 | | | | | | >7.00 |
| 12 | | 0.1 | | | | | 0.05 | 3.93 |
| 13 | | 0.1 | | | | 0.1 | | 2.50 |
| 14 | | 0.1 | | | | 0.1 | 0.05 | 5.19 |
| 15 | | 0.1 | | | 0.2 | 0.1 | | 1.84 |
| 16 | | 0.1 | | | 0.2 | 0.1 | 0.05 | 2.27 |
| 17 | | | 0.1 | | | 0.1 | | 2.47 |
| 18 | | | 0.1 | | | 0.1 | 0.05 | 3.75 |

### Example 6

Table 6 shows that the above improvements still hold in the presence of various combinations additives such as thioesters(DLTDP), zinc stearate, and other hindered phenols XIII).

**Table 6**

| Synergist Effects in the Presence of Additive Combinations | | | | | | | | | |
|---|---|---|---|---|---|---|---|---|---|
| Additive Concentration % | | | | | | | | | |
| Run | XII | XIII | XIV | XV | DLTDP | VII | I | ZnSt | P3/P1 |
| Cntrl | No AO | | | | | | | | ».0 |
| 1 | 0.05 | 0.05 | | | | 0.20 | | 0.05 | 6.33 |
| 2 | 0.05 | 0.05 | | | | 0.20 | 0.20 | | 1.79 |
| 3 | 0.05 | | 0.05 | | | 0.20 | | 0.05 | 1.80 |
| 4 | 0.05 | | 0.05 | | | 0.20 | 0.20 | | 1.71 |
| 5 | 0.05 | | | 0.05 | | 0.20 | | 0.05 | 4.27 |
| 6 | 0.05 | | | 0.05 | | 0.20 | 0.20 | | 1.86 |
| 7 | 0.10 | | | | 0.10 | 0.10 | 0.10 | | 1.71 |
| 8 | | | 0.10 | | 0.10 | 0.10 | 0.10 | | 2.13 |
| 9 | | | | 0.10 | 0.10 | 0.10 | 0.10 | | 2.00 |
| 10 | 0.10 | | | | 0.20 | | | 0.05 | 3.49 |

### Example 7

### Synergistic Effects in UV Aging from Combination of a Phosphite and Hindered Amino Light Stabilizer

**Table 7**

| XII | XV | VIII | I | ZN ST | UV AGING HRS |
|---|---|---|---|---|---|
| 0.1 | | 0.2 | 0.1 | | 1280 |
| 0.1 | | 0.2 | 0.1 | | 1280 |
| 0.1 | | | 0.1 | 0.05 | 843 |
| 0.1 | | | 0.1 | 0.1 | 843 |
| | | | | 0.1 | 666 |
| 0.1 | | | 0.1 | 0.05 | 621 |
| | | | | 0.05 | 528 |
| | 0.1 | 0.2 | 0.1 | | 1267 |
| | 0.1 | | 0.1 | 0.05 | 843 |
| | 0.1 | 0.2 | | 0.1 | 474 |
| No Add. | | | | | 333 |

Table 7 Synergistic Effects in UV Aging from Combinations of a Phosphite and Hindered Amino Light Stabilizer, demonstrates that the combination of the HALS(I) and the phosphite(VIII) results in UV aging times significantly longer than when either of these two components are used without the other.

The question may arise as to whether zinc stearate degades the performance of an additive package, since the best performing packages do not contain zinc stearate. Zinc stearate does not detract from the performance of the package. As the table shows, the UV aging of the resin containing only zinc stearate was better than the resin containing no additive (528 hours to 333 hours). In the presence of a hindered phenol(XII) and a HALS(I), increasing the zinc stearate level from 0.05 to 0.10 percent had no effect on the UV aging (843 hours in both cases). The improved UV aging performance can be attributed to the effects from the presence of the combination of VIII and I.

## Claims

1. An additive composition for increasing processing stability and/or UV stability of polymers of 4-methyl-1-pentene which comprises a mixture of at least one hindered amine and at least one phosphite compound, wherein the ratio of said hindered amine to said phosphite is in the range of about 0.1 to about 10 parts hindered amine to 0.1 to about 10 parts phosphite, ad said hindered amine is selected from the group consisting of:
dimethylsuccinate polymer with 4-hydroxy-2,2,6,6-tetramethyl-1-1-piperidenethanol,
poly((6-((1,1,3,3-tetramethylbutyl-imino)-1,3,5-triazine-2,4-diyl)-2-(2,2,6,6-tetramethylpiperidyl)-imino-hexamethylene-4-(2,2,6,6-tetramethylpiperidyl)-)imino)),
poly(((6-morpholino-s-triazine-2,4-diyl)2,2,6,6-tetramethyl-4-piperidyl)imino-)-hexamethylene(2,2,6,6-tetramethyl-4-piperidy)imino),
bis (2,2,6,6-tetramethyl-4-piperidinly)sebacate,
poly(2,2,6,6-tetraalkyl-4-piperidyl)amine; and
said phosphite compound is selected from the group consisting of:
bis(2,4-di-t-butylphenyl)pentaerythritol diphosphite,
bis(2,4-di-t-butylphenyl)pentaerythritol diphosphite + triisopropylamine,
tris-2,4-di-t-butylphenylphosphite,
bis(2,4-tri-t-butylphenyl)pentraerythritol diphosphite,
distearylpentaerythritol diphosite, and
tetrakis(2,4,di-tert-butylphenyl)4,4'biphenylene diphosphate.

2. The composition in accordance with claim 1 wherein there is additionally present one or more hindered phenols having a ratio of said hindered amine to said phosphite to said hindered phenol in the range of about 0.1 to about 10 parts hindered amine to 0.1 to about 10 parts phosphite to 0.1 to about 10 parts hindered phenol: and said hindered phenol is selected from the group consisting of:
tetrakis(methylene(3,5-di-t-butyl-4-hydroxyhydrocinnamate))methane,
octadecyl-3-5-di-t-butyl-4-hydroxyhydrocinnamate,
1,3,5-tris(3,5-di-t-butyl-4-hydroxybenzyl)-mesitylene,
1,3,5-tris(3,5-di-t-butyl-4-hydroxybenzyl)-isocyanurate; and
3,5-di-t-butyl-4-hydroxyhydrocinnamic acid triester with 1,3,5-tris(2 hydroxyethyl)-5-triazine-2,4,6-(1H, 3H, 5H) trione.

3. The additive composition of claim 1, wherein said hindered amine, is dimethylsuccinate polymer with 4-hydroxy-2,2,6,6-tetramethyl-1-piperidenethanol and said phosphite is bis(2,4-di-t-butyl)pentaerythritoldiphosphate, present in a ratio of 1 : 2.

4. The additive composition of claim 2, wherein said hindered amine is dimethylsuccinate polymer with 4-hydroxy-2,2,6,6-tetramethyl-1-piperidenethanol, said phosphite is bis(2,4-di-t-butyl)pentaerythritoldiphosphate, and said hindered phenol is 1,3,5-tris(3,5-di-t-butyl-4-bydroxybenzyl)mesitylene, present in a ratio of 1: 2 : 1.

5. The additive composition of claim 1, wherein said hindered amine is dimethylsuccinate polymer with 4-hydroxy-2,2,6,6-tetramethyl-1-piperidenethanol and said phosphite is tris-2-4,di-t-butylphenylphosphite, present in a ratio of 1 : 2.

6. The additive composition of claim 2, wherein said hindered amine is dimethylsuccinate polymer with 4-hydroxy-2,2,6,6-tetramethyl-1-piperidenethanol, said phosphite is tris-2-4,di-t-butylphenylphosphite and said hindered phenol is 1,3,5-tris(3,5-dibutyl-4-hydroxybenzyl)isocyanurate, present in a ratio of 1 : 2 : 1.

7. A composition comprising poly(4-methyl-1-pentene) and the additive composition of claim 1, in an amount sufficient to increase processing stability, in particular wherein said hindered amine is present in an amount in the range of about 0.0001 to about 10.0 weight percent and said phosphite compound is present in an amount in the range of about 0.0001 to about 10.0 weight percent, based on the total weight of the polymer composition; more particularly wherein said hindered amine is present in an amount in the range of about 0.01 to about 1.0 weight percent and said phosphite compound is present in an amount in the range of about 0.01 to about 1.0 weight percent, based on the total weight of the polymer composition; even more particularly wherein said hindered amine is present in an amount in the range of about 0.05 to about 0.5 weight percent and said phosphite compound is present in an amount in the range of about 0.05 to about 0.50 weight percent, based on the total weight of the polymer composition.

8. A composition comprising poly(4-methyl-1-pentene) and the additive composition of claim 2 in an amount sufficient to increase processing stability, in particular wherein said hindered phenol is present in an amount in the range of about 0.0001 to about 10.0 weight percent, based on the total weight of the polymer composition; more particularly wherein said hindered phenol is present in an amount in the range of about 0.01 to about 1.0 weight percent, based on the total weight of the polymer composition; even more particularly, wherein said hindered phenol is present in an amount in the range of about 0.05 to about 0.5 weight percent, based on the total weight of the polymer composition.

9. A composition comprising poly(4-methyl-1-pentene) and the additive composition of claim 1 in an amount sufficient to increase UV stability, in particular wherein said hindered amine is present in an amount in the range of about 0.0001 to about 10.0 weight percent and said phosphite compound is present in an amount in the range of about 0.0001 to about 10.0 weight percent, based on the total weight of the polymer composition; more particularly wherein said hindered amine is present in an amount in the range of about 0.01 to about 1.0 weight percent and said phosphite compound is present in an amount in the range of about 0.01 to about 1.0 weight percent, based on the total weight of the polymer composition; even more particularly wherein said hindered amine is present in an amount in the range of about 0.05 to about 0.5 weight percent and said phosphite compound is present in an amount in the range of about 0.05 to about 0.50 weight percent, based on the total weight of the polymer composition.

10. A composition comprising poly(4-methyl-1-pentene) and the additive composition of claim 2 in an amount sufficient to increase UV stability, in particular wherein said hindered phenol is present in an amount in the range of about 0.0001 to about 10.0 weight percent, based on the total weight of the polymer composition; more particularly wherein said hindered phenol is present in an amount in the range of about 0.01 to about 1.0 weight percent, based on the total weight of the polymer composition; even more particularly wherein said hindered phenol is present in an amount in the range of about 0.05 to about 0.5 weight percent, based on the total weight of the polymer composition.

11. A composition comprising poly(4-methyl-1-pentene) and the additive composition of claim 3 for increasing the processing stability of said polymers, wherein said additive composition is added to poly(4-methyl-1-pentene) in an amount in the range of about 0.05 to about 0.5 weight percent based on the total weight of the polymer composition.

12. A composition comprising poly(4-methyl-1-pentene) and the additive composition of claim 4 for increasing the processing stability of said polymers, wherein said additive composition is added to poly(4-methyl-1-pentene) in an amount in the range of about 0.05 to about 0.5 weight percent based on the total weight of the polymer composition.
